(19) Europäisches Patentamt
European Patent Office
Office européen des brevets

(11) **EP 4 213 330 A1**

(12) **EUROPEAN PATENT APPLICATION**

(43) Date of publication:
**19.07.2023 Bulletin 2023/29**

(21) Application number: **22151887.1**

(22) Date of filing: **17.01.2022**

(51) International Patent Classification (IPC):
**H02J 3/38** $^{(2006.01)}$    **H02M 7/483** $^{(2007.01)}$

(52) Cooperative Patent Classification (CPC):
**H02J 3/38; H02M 5/4585; H02M 7/4835**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GE Energy Power Conversion
Technology Ltd
RUGBY
Warwickshire
CV21 1BD (GB)**

(72) Inventors:
• **Geske, Martin
12277 Berlin (DE)**
• **Basic, Duro
91140 Villebon-sur-Yvette (FR)**

(74) Representative: **Serjeants LLP
Dock
75 Exploration Drive
Leicester, LE4 5NU (GB)**

(54) **POWER CONVERTERS AND METHODS OF OPERATING POWER CONVERTERS**

(57)    A power converter (1) configured as a variable speed drive (VSD) is described. The power converter (1) includes a network-side converter unit (2) with one or more AC terminals electrically connectable to an AC power network (8) and a machine-side converter unit (4) with one or more AC terminals electrically connectable to an electrical machine (e.g., a motor). The DC terminals (6a, 6b) of the network-side converter unit (2) are electrically connected to the DC terminals (6c, 6d) of the machine-side converter unit (4). The network-side and machine-side converter units are configured as modular multilevel converters (MMCs). The power converter (1) is adapted to carry a variable bipolar DC voltage and a unipolar DC current. A controller is used to control one of the network-side and machine-side converter units (2, 4). The controller is adapted to control the magnitude and polarity of the intermediate DC voltage to achieve a desired magnitude and direction of power flow between the network-side and machine-side converter units (2, 4).

FIG. 2

EP 4 213 330 A1

**Description**

<u>Technical Field</u>

The present invention relates to power converters, and in particular to power converters for interfacing an electrical machine (e.g., a motor or generator) to an alternating current (AC) power network or utility grid.

<u>Background Art</u>

Modular multilevel converters (MMCs) are well known for various medium- and high-power applications.
AC/DC/AC power converters are also well known and can include two double-star MMC AC/DC converter units electrically connected together. For high voltage direct current (HVDC) transmission applications, the DC terminals of the converter units are electrically connected by a transmission DC link. For other applications, the converter units can be connected back-to-back where the DC terminals are electrically connected directly without a DC link. Such an AC/DC/AC power converter can be used as an inter-tie between a pair of AC power networks or utility grids (hereinafter just "power network"), or as a variable speed drive (VSD) to connect an electrical machine to a power network, for example.

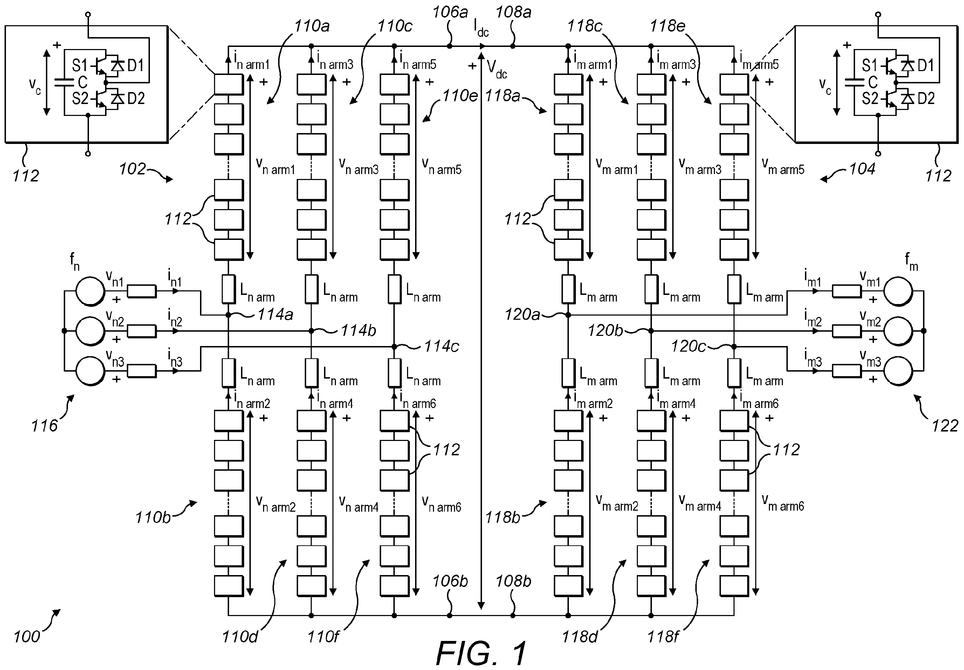

Figure 1 shows an AC/DC/AC power converter 100 with two double-star MMC AC/DC converter units 102, 104. The DC terminals 106a, 106b of the first converter unit 102 are electrically connected directly to the DC terminals 108a, 108b of the second converter unit 104. Each converter unit 102, 104 is electrically connected to a respective power network operating with substantially constant voltage at substantially constant frequency, e.g., 50 Hz or 60 Hz.
The first converter unit 102 includes six converter arms 110a, 110b, ..., 110f where each converter arm includes a plurality of series-connected submodules 112. The converter arms 110a, 110b, ..., 110f are arranged in pairs that define a respective converter branch. In particular, the first converter unit 102 includes:

- a first converter branch defined by the first and second converter arms 110a, 110b with a first intermediate node 114a which is connected to a first AC phase of a first power network 116,
- a second converter branch defined by the third and fourth converter arms 110c, 110d with a second intermediate node 114b which is connected to a second AC phase of the first power network 116, and
- a third converter branch defined by the fifth and sixth converter arms 110e, 110f with a third intermediate node 114c which is connected to a third AC phase of the first power network 116.

The first, second and third intermediate nodes 114a, 114b and 114c define AC terminals of the first converter unit 102.
The second converter unit 104 includes six converter arms 118a, 118b, ..., 118f where each converter arm includes a plurality of series-connected submodules 112. The converter arms 118a, 118b, ..., 118f are arranged in pairs that define a respective converter branch. In particular, the second converter unit 104 includes:

- a first converter branch defined by the first and second converter arms 118a, 118b with a first intermediate node 120a which is connected to a first AC phase of a second power network 122,
- a second converter branch defined by the third and fourth converter arms 118c, 118d with a second intermediate node 120b which is connected to a second AC phase of the second power network 122, and
- a third converter branch defined by the fifth and sixth converter arms 118e, 118f with a third intermediate node 120c which is connected to a third phase of the second power network 122.

The first, second and third intermediate nodes 120a, 120b and 120c define AC terminals of the second converter unit 104.
In the following description, the subscripts "n" and "m" are used for the quantities of the first and second converter units, respectively.
The following labels are used in Figure 1 to represent the various electrical quantities of the power converter 100:

- $v_c$ is the voltage across the capacitor of each submodule 112,
- $v_{n\,arm1}$, $v_{n\,arm2}$, ... $v_{m\,arm6}$ are the respective converter arm voltages,
- $i_{n\,arm1}$, $i_{n\,arm2}$, ... $i_{m\,arm6}$ are the respective converter arm currents,
- $L_{n\,arm1}$, $L_{n\,arm2}$, ... $L_{m\,arm6}$ are the respective converter arm inductances,
- $V_{dc}$ is the DC terminal voltage, and
- $I_{dc}$ is the DC terminal current.

The following labels are used in Figure 1 to represent the various electrical quantities of the first power network

116:

- $f_n$ is the network frequency,
- $v_{n1}$, $v_{n2}$ and $v_{n3}$ are the AC terminal voltages for each phase, and
- $i_{n1}$, $i_{n2}$ and $i_{n3}$ are the AC terminal currents for each phase.

The following labels are used in Figure 1 to represent the various electrical quantities of the second power network 122:

- $f_m$ is the network frequency,
- $v_{m1}$, $v_{m2}$ and $v_{m3}$ are the AC terminal voltages for each phase, and
- $i_{m1}$, $i_{m2}$ and $i_{m3}$ are the AC terminal currents for each phase.

The converter arm currents and voltages are predominantly defined by the external AC and DC terminal voltages and currents - assuming that circulating currents used for balancing of the stored energies in the converter arms are ignored. The converter arm currents $i_{n\,arm1,3,5}$ and $i_{n\,arm2,4,6}$ and the converter arm voltages $v_{n\,arm1,3,5}$ and $v_{n\,arm2,4,6}$ for the first converter unit 102 are given by:

$$i_{n\,arm1,3,5} = \frac{I_{dc}}{3} + \frac{i_{n1,3,5}}{2}$$

$$i_{n\,arm2,4,6} = \frac{I_{dc}}{3} - \frac{i_{n2,4,6}}{2}$$

$$v_{n\,arm1,3,5} = \frac{V_{dc}}{2} - v_{n1,3,5}$$

$$v_{n\,arm2,4,6} = \frac{V_{dc}}{2} + v_{n2,4,6}$$

The converter arm currents $i_{m\,arm1,3,5}$ and $i_{m\,arm2,4,6}$ and the converter arm voltages $v_{m\,arm1,3,5}$ and $v_{m\,arm2,4,6}$ for the second converter unit 104 are given by:

$$i_{m\,arm1,3,5} = -\left(\frac{I_{dc}}{3} + \frac{i_{m1,3,5}}{2}\right)$$

$$i_{m\,arm2,4,6} = -\left(\frac{I_{dc}}{3} - \frac{i_{m2,4,6}}{2}\right)$$

$$v_{m\,arm1,3,5} = \frac{V_{dc}}{2} - v_{m1,3,5}$$

$$v_{m\,arm2,4,6} = \frac{V_{dc}}{2} + v_{m2,4,6}$$

The intermediate DC voltage $V_{dc}$ is unipolar and the DC current $I_{dc}$ is varied according to the active power transfer between the first and second converter units 102, 104. Because a unipolar DC voltage is used, it is possible to use submodules with a half-bridge topology, i.e., where each submodule 112 includes a pair of series-connected controllable semiconductor switches (e.g., IGBTs S1, S2) and a capacitor C (or other energy storage device) electrically connected in parallel with the pair of series-connected switches as shown in Figure 1. A free-wheeling diode D1, D2 is electrically connected in anti-parallel with each of the semiconductor switches. Such submodules 112 are capable of providing unipolar voltage at their terminals.

From the basic principles of MMC operation there will be ripple components in instantaneous converter arm powers. The instantaneous converter arm powers for the first and second converter units 102, 104 are defined as the products of converter arm currents and converter arm voltages:

$$p_{n\,armi} = -v_{n\,armi}i_{n\,armi} \quad i = 1, 2, \dots, 6$$

$$p_{m\,armi} = -v_{m\,armi}i_{m\,armi} \quad i = 1, 2, \dots, 6$$

For example, oscillations in the instantaneous power for the first converter arm 118a of the second converter unit 104 is given by:

$$p_{m\,arm1} = -v_{m\,arm1}i_{m\,arm1} = \left(\frac{V_{dc}}{2} - v_{m1}\right)\left(\frac{I_{dc}}{3} + \frac{i_{m1}}{2}\right)$$

Assuming an AC voltage for a phase with current and voltage magnitudes $I_m$ and $V_m$:

$$i_{m1} = I_m \cos(\omega_m t - \theta_m)$$

$$v_{m1} = V_m \cos(\omega_m t)$$

where $\omega_m$ is the angular frequency (i.e., $\omega_m = 2\pi f_m$) and $\theta_m$ is the phase shift between the AC current and voltage.

The converter arm powers in the first and second converter units 102, 104 therefore contain oscillations at the network frequency $f_m$ and at twice the network frequency (i.e. $2f_m$). For example, for the first converter arm 118a of the second converter unit 104:

$$\Delta p_{m\,arm1} = -\frac{V_m I_{dc}}{3}\cos(\omega_m t) + \frac{V_{dc} I_m}{4}\cos(\omega_m t - \theta_m) - \frac{V_m I_m}{4}\cos(2\omega_m t - \theta_m)$$

It will be readily understood that equivalent oscillations will be present in the converter arm powers of the converter arms 110a, 110b, ..., 110f of the first converter unit 102 and in the other converter arms 118b, ..., 118f of the second converter unit 104.

The oscillations in the converter arm powers define evolution of stored energies in the converter arm powers and hence the voltages across the capacitors of the submodules 116 in the converter arms.

For HVDC transmission and inter-ties, these ripple components in the converter arm powers are not normally a serious problem because the frequency of the connected power networks is constant and cannot normally get very low. The capacitance of the capacitors (or other energy storage devices) in the submodules 112 can be selected to be sufficiently large to maintain voltage oscillation of the capacitors at an acceptable level. The power converter 100 shown in Figure 1 is therefore suitable for power transfer between the electrically connected power networks by using a substantially constant DC voltage.

Difficulties arise if the power converter 100 shown in Figure 1 is used for VSD applications, i.e., where the power converter is used instead to interface an electrical machine such as a synchronous or asynchronous motor or generator, which is operated with variable frequency/speed, to a power network operating at substantially constant voltage and substantially constant frequency (e.g., 50 or 60 Hz). In this case, it will be readily understood that the first, second and third intermediate nodes 120a, 120b and 120c of the second (or hereinafter "machine-side") converter unit 104 would be connected to a respective first, second and third AC phase of the electrical machine.

Electrical machines are normally operated with substantially constant magnetic flux in a base region where the machine frequency is below the rated or nominal value. The ratio between the AC voltage $V_m$ and frequency $f_m$ on the machine-side (i.e., at the AC terminals of the machine-side converter unit) is substantially constant and is proportional to the magnetic flux $\psi_m$ in the electrical machine, i.e.,

$$\frac{V_m}{f_m} \propto \psi_m$$

The magnetic flux of the electrical machine is defined at least in part by the magnetizing component $I_{md}$ of the AC currents at the AC terminals of the machine-side converter unit 104 that is in phase with the machine flux.

Machine electromagnetic torque ($T_m$) is proportional to the product of the machine flux and the torque-generating component $I_{mq}$ of the AC currents at the AC terminals of the machine-side converter unit 104 that is perpendicular to the magnetic flux, i.e.,

$$T_m \propto I_{mq}\psi_m$$

In order to maximise torque, the magnetic flux of the electrical machine is normally kept substantially constant (e.g., at a nominal level) when the electrical machine is operated at a frequency below the rated or nominal frequency.

It will be readily understood that as the speed of the electrical machine is reduced, the total AC voltage $V_m$ at the AC terminals of the machine-side converter unit 104 is reduced while the AC currents remain substantially constant - at least in a constant torque operation where both the torque-generating and magnetizing current components are kept at a substantially constant level. The total AC current $I_m$ at the AC terminals of the machine-side converter unit 104 is given by:

$$I_m = \sqrt{I_{md}^2 + I_{mq}^2} \approx const.$$

The instantaneous value of the AC currents $i_m$ is given by:

$$i_m = I_m \cos(\omega_m t - \theta_m)$$

where $\theta_m = \tan^{-1}\left(\frac{I_{md}}{I_{mq}}\right)$.

Considering that at low frequencies, the AC voltage $V_m$ is low, the only remaining significant component in the converter arm power oscillations which is of particular concern for VSD constant torque applications is the component linked to the product of the machine current and DC voltage $V_{dc}$, i.e.,

$$\Delta p_{arm} \approx \frac{V_{dc}}{4} i_m = \frac{V_{dc} I_m}{4} \cos(\omega_m t - \theta_m)$$

Because there are substantially constant AC currents on the machine side, this power component, which fluctuates at the frequency $f_m$ of the AC currents at the AC terminals of the machine-side converter (or "machine frequency"), has essentially the same magnitude if a constant DC voltage $V_{dc}$ is maintained. This creates voltage oscillations at the machine frequency in the capacitor voltages of the submodules in the converter arms as shown below:

$$\Delta v_{c\,arm} \approx \frac{1}{C_{eq\,arm}} \int \frac{\Delta p_{arm}}{V_{c0\,arm}} dt$$

$$\Delta v_{c\,arm} \approx \frac{1}{4\omega_m C_{eq\,arm}} \frac{V_{dc}}{V_{c\,arm}} I_m \sin(\omega_m t - \theta_m)$$

where $C_{eq\,arm}$ is the equivalent converter arm capacitance of a plurality of $N$ series-connected submodules with capacitance C ($C_{eq\,arm} = C/N$), and $V_{c0\,arm}$ is the average capacitor voltage in the converter arm ($V_{c0\,arm} = NV_{c0}$) where $V_{co}$ is the average submodule capacitor voltage.

The amplitude of the dominant instantaneous power ripple is proportional to the product of the DC voltage and the AC currents at the AC terminals of the machine-side converter, and inversely proportional to the machine frequency. Due to the constant amplitude of the power oscillations, at low speeds where the machine frequency approaches zero, the voltage oscillations in the capacitors of the submodules become excessive and cannot be maintained within acceptable range in a passive manner - i.e., by selecting a higher capacitance. The power converter 100 shown in Figure 1 with a constant DC voltage is therefore inherently unsuitable for VSD applications where the constant torque operation is required at low and zero machine frequencies.

It has been found that the voltage oscillations in the capacitors (or energy storage devices) of the submodules can be limited at low machine frequencies by using a variable value of the intermediate DC voltage. In this regard, a lowered DC voltage at lower machine frequencies at least partly reduces the magnitudes of the above-described oscillations within the submodule voltages due to the power oscillation terms.

Summary of the invention

The present invention provides an AC/DC/AC power converter capable of operating with a variable bipolar DC voltage and a unipolar DC current. In particular, the power converter is configured as a VSD which interfaces an AC electrical machine that operates with variable voltage at variable frequency with an AC power network (or utility grid) that operates with substantially constant voltage at substantially constant frequency, the power converter comprising:

a network-side converter unit comprising at least one converter branch connected between first and second DC terminals, each converter branch including an AC terminal electrically connectable to a corresponding AC phase of the power network;

a machine-side converter unit comprising at least one converter branch connected between third and fourth DC terminals, each converter branch including an AC terminal electrically connectable to a corresponding AC phase of the electrical machine, wherein the first and second DC terminals are respectively electrically connected to the third and fourth DC terminals, and the power converter is adapted to carry a variable bipolar DC voltage and a unipolar DC current; and

a controller for controlling one of the network-side and machine-side converter units;

wherein the network-side converter unit is a modular multilevel converter (MMC), wherein each converter branch of the network-side converter unit comprises a first converter arm electrically connected between the first DC terminal and the respective AC terminal and including a plurality of series-connected submodules, and a second converter arm electrically connected between the respective AC terminal and the second DC terminal and including a plurality of series-connected submodules;

wherein the machine-side converter unit is an MMC, wherein each converter branch of the machine-side converter unit comprises a first converter arm electrically connected between the third DC terminal and the respective AC terminal and including a plurality of series-connected submodules, and a second converter arm electrically connected between the respective AC terminal and the fourth DC terminal and including a plurality series-connected submodules; and

wherein each submodule of the network-side and machine-side converter units comprises:

a first submodule arm including a first controllable semiconductor switch and a first diode electrically connected in series;

a second submodule arm, connected in parallel with the first submodule arm, the second submodule arm including a second controllable semiconductor switch and a second diode electrically connected in series; and

an energy storage device electrically connected in parallel with the first and second submodule arms; and

wherein the controller is adapted to control the magnitude and polarity of the DC voltage to achieve a desired magnitude and direction of power flow between the network-side and machine-side converter units.

It will be readily understood that the network-side and machine-side converter units are double-star MMC AC/DC converter units and the power converter is an AC/DC/AC power converter.

Each submodule has a "reduced full-bridge topology" where each submodule arm consists essentially of a series-connected controllable semiconductor switch (e.g., an IGBT) and diode. A connecting point between each semiconductor switch and diode defines a respective submodule terminal. The reduced full-bridge topology can be contrasted with the usual full-bridge topology where each submodule arm includes a pair of series-connected controllable semiconductor switches. In the reduced full-bridge topology the series-connected semiconductor switch and diode have opposing current flow directions. Using a reduced full-bridge topology reduces the cost of each submodule because it requires fewer semiconductor switches and also provides increased reliability. A free-wheeling diode is normally connected in anti-parallel with each of the semiconductor switches to protect the semiconductor switch against negative polarisation. The free-wheeling diodes may conduct some small parasitic reverse current but do not provide a normal conduction path through the submodules. The semiconductor switches in each submodule are controlled to switch between an on-state (turned on) and an off-state (turned off).

Because a reduced full-bridge topology is used for the submodules, in order to achieve controllability of the output voltage states, the unipolar arm currents must flow through the submodules in a direction which enables their flow through the series-connected diodes when the semiconductor switches are turned off. If the first submodule arm comprises a first controllable semiconductor switch S1 and the second submodule arm comprises a second controllable semiconductor switch S2, the table below summarises the various output states.

| Switching States (1=on and 0=off) | | Output voltage ($V_{out}$) |
|---|---|---|
| S1 | S2 | |
| 1 | 0 | 0 |
| 0 | 0 | $-V_c$ |
| 1 | 1 | $V_c$ |
| 0 | 1 | 0 |

Therefore the submodules with a reduced full-bridge topology are capable of producing bipolar and fully controllable arm voltages on the condition that arm currents are unipolar.

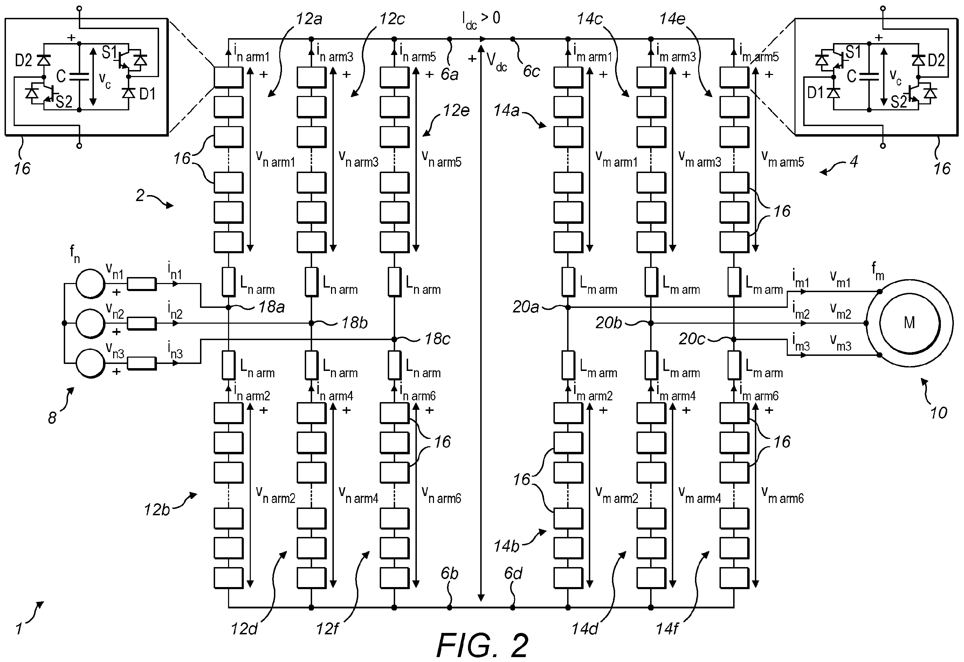

The arm currents are maintained unipolar by imposing a sufficiently high DC current $I_{dc}$. Considering that the DC current $I_{dc}$ flows in opposing directions in the network-side and machine-side converter units, the interconnection of the submodule terminals of the series-connected submodules of the machine-side converter unit is reversed as compared with the interconnection of the submodule terminals of the series-connected submodules of the network-side converter unit. The terminals of the submodules are reversed (or swapped or cross-connected). This is shown schematically in Figure 2 for the series-connected submodules 16 of the network-side and machine-side converter units 2, 4 of the power converter according to the present invention. Figure 2 shows the terminal interconnections of the submodules 16 for a particular direction of DC current. It will be readily understood that the terminal interconnections of the submodules 16 of the network-side and machine-side converter units 2, 4 can both be reversed, but then the direction of the DC current through the power converter will also be reversed.

According to the switching state of each submodule - as determined by the switching state of the semiconductor switches - the converter arm current will either charge or discharge the energy storage device (e.g., capacitor) or bypass the energy storage device so that its voltage is maintained.

With the selected direction of the DC current, the submodules of the machine-side converter unit must be cross-connected to achieve the same controllability of the submodule output states as the network-side converter unit.

Operating the power converter with variable bipolar DC voltage results in a unipolar DC current, which is compatible with the use of submodules having a reduced full-bridge topology.

Although not forming part of the present invention, in some arrangements of the power converter the network-side converter unit does not have to be an MMC. For example, each converter branch of the network-side converter unit can comprise a first thyristor half-bridge electrically connected between the first DC terminal and the respective AC terminal, and a second thyristor half-bridge electrically connected between the respective AC terminal and the second DC terminal.

The power converter can further include a short-circuit branch electrically connected between the first and second DC terminals. The short-circuit branch includes a controllable switch. The short-circuit branch can further include an inductor.

The present further provides an arrangement comprising:

an AC power network (or utility grid) that operates with substantially constant voltage at substantially constant frequency;

an AC electrical machine (e.g., a synchronous or asynchronous motor or generator) that operates with variable voltage at variable frequency; and

a power converter as described above, wherein each AC terminal of the network-side converter unit is electrically connected to a corresponding AC phase of the power network and each AC terminal of the machine-side converter unit is electrically connected to a corresponding AC phase of the electrical machine.

The controller can be further adapted to control the polarity of the intermediate DC voltage to achieve reversal of power flow - e.g., from the power network to the electrical machine for motoring applications and from the electrical machine to the power network for generating or regenerative applications.

The power network can operate at any suitable frequency, e.g., 50 Hz or 60 Hz.

The power converter preferably includes a network-side controller adapted to control the network-side converter unit, and a machine-side controller adapted to control the machine-side converter unit. The controllers can be implemented separately or as a single controller.

The intermediate DC voltage is preferably controlled by the machine-side controller and the DC current is preferably controlled by the network-side controller. In particular, it is preferably the machine-side controller that is adapted to control the magnitude and polarity of the DC voltage to achieve the desired power flow between the network-side and machine-side converter units.

The present invention further provides a method of controlling a power converter interfacing an AC electrical machine that operates with variable voltage at variable frequency with an AC power network that operates with substantially constant voltage at substantially constant frequency, the power converter comprising:

a network-side converter unit comprising at least one converter branch connected between first and second DC terminals, each converter branch including an AC terminal electrically connectable to a corresponding AC phase of the power network; and

a machine-side converter unit comprising at least one converter branch connected between third and fourth DC terminals, each converter branch including an AC terminal electrically connectable to a corresponding AC phase of the electrical machine, wherein the first and second DC terminals are respectively electrically connected to the third and fourth DC terminals, and the power converter is adapted to carry a variable bipolar DC voltage and a unipolar DC current;

wherein the network-side converter unit is an MMC, wherein each converter branch of the network-side converter unit comprises a first converter arm electrically connected between the first DC terminal and the respective AC terminal and including a plurality of series-connected submodules, and a second converter arm electrically connected between the respective AC terminal and the second DC terminal and including a plurality series-connected submodules;

wherein the machine-side converter unit is an MMC, wherein each converter branch of the machine-side converter unit comprises a first converter arm electrically connected between the third DC terminal and the respective AC terminal and including a plurality of series-connected submodules, and a second converter arm electrically connected between the respective AC terminal and the fourth DC terminal and including a plurality series-connected submodules; and

wherein each submodule of the network-side and machine-side converter units comprises:

a first submodule arm including a first controllable semiconductor switch and a first diode electrically connected in series;

a second submodule arm, connected in parallel with the first submodule arm, the second submodule arm including a second controllable semiconductor switch and a second diode electrically connected in series; and

an energy storage device electrically connected in parallel with the first and second submodule arms;

wherein the method comprises controlling, e.g., using a controller for one of the network-side and machine-side converter unit, the magnitude and polarity of the DC voltage to achieve a desired magnitude and direction of power flow between the network-side and machine-side converter units. The DC voltage is preferably controlled using a machine-side controller for the machine-side converter unit and the DC current is preferably controlled using a network-side controller for the network-side converter unit.

As described above, the polarity of the variable DC voltage determines the direction of power flow between the network-side and machine-side converter units. The DC voltage value can be set by the machine-side converter unit to control the total energy stored in the submodules of the machine-side converter unit, i.e., in the energy storage devices of each submodule, by balancing the average power transferred between the network-side and machine-side converter units with the power supplied to the electrical machine. The method can further comprise controlling the machine-side converter unit to control the AC voltages in the AC terminals of the machine-side converter unit based on desired machine parameters such as torque, speed, and magnetising flux.

The method can further comprise controlling the DC current. The DC current can be controlled with reference to the AC currents at the AC terminals of one or both of the network-side and machine-side converter units. Typically, the DC current will be set to a level that is defined by the maximum AC current magnitudes at the AC terminals of both the network-side and machine-side converter units, preferably scaled by a respective predefined gain or scaling factor. The method can further comprise controlling the network-side converter unit to control the AC currents at its AC terminals, e.g., to control the total energy stored in the submodules of the network-side converter unit or to control reactive power or power factor. The AC currents are controlled and AC voltages are adjusted by the current control.

In one arrangement, the machine-side converter unit can be controlled on the basis of:

- a first machine-side voltage reference signal indicative of a desired converter DC voltage at the DC terminals of the machine-side converter unit, and
- a second machine-side voltage reference signal indicative of desired converter AC voltages at the AC terminals of the machine-side converter unit.

The second machine-side voltage reference signal can be generated by a machine-side sub-controller which receives:

- a machine-side AC current reference signal, and
- a machine-side AC current feedback signal.

Any suitable sub-controller can be used, e.g., a synchronous reference frame based sub-controller, or one or more of a proportional (P) controller, a proportional integral (PI) controller, and a resonant (RES) controller.

The machine-side AC current reference signal can have an active current component and/or a reactive current component. The active current component can be indicative of a desired torque or speed of the electrical machine (i.e., an active or torque-inducing component) and the reactive current component can be indicative of a desired magnetising flux or the electrical machine or power factor (i.e., a reactive or magnetising current component), for example.

The network-side converter unit can be controlled on the basis of:

- a first network-side voltage reference signal indicative of desired converter AC voltages at the AC terminals of the network-side converter unit, and
- a second network-side voltage signal indicative of a desired converter DC current at the DC terminals of the network-side converter unit.

The first network-side voltage reference signal can be generated by a first network-side sub-controller which receives:

- a network-side AC current reference signal, and
- a network-side AC current feedback signal.

The network-side AC current reference signal can have an active current component and/or a reactive current component. The active current component can be used to control the total energy stored in the submodules of the network-side converter unit and the reactive current component can be indicative of a desired reactive power or power factor, for example.

The second network-side voltage reference signal can be generated by a second network-side sub-controller which receives:

- a DC current reference signal that is selected to be the maximum of the absolute values of the network-side and machine-side AC current reference signals scaled by a respective predefined gain or scaling factor, and
- a DC current feedback signal.

Any suitable sub-controllers can be used, e.g., synchronous reference frame based sub-controllers, or one or more of a proportional (P) controller, a proportional integral (PI) controller, and a resonant (RES) controller.

The method can further comprise auxiliary common mode voltage injection to maintain full controllability of the balance of the stored energies in the converter arms of the network-side and machine-side converter units at low machine frequency when the intermediate DC voltage and machine-side AC voltages are low and when conventional balancing methods based on AC fundamental and DC circulating currents, and which provide three degrees of control freedom in the vertical direction and two degrees of control freedom in the horizontal direction, respectively, are ineffective. This auxiliary common mode voltage injection-based balancing aims to maintain average balance acting against relatively weak second order unbalancing sources. It is in contrast with the known prior art, which aims to reduce the imbalances caused by the large instantaneous converter arm power oscillations. In the present invention, the effect of the instantaneous power oscillations is sufficiently reduced to acceptable levels by using a variable intermediate DC voltage. The method can further comprise controlling one or both of the network-side and machine-side converter units to inject a first set of common mode voltages at a first frequency with opposing polarities in the first and second (or "upper" and "lower") converter arms of each converter branch, and a second set of common mode voltages at a second frequency, different from the first frequency, and with the same polarities in the first and second converter arms of each converter branch.

In order to eliminate the effect of the common mode injection at the first frequency at the AC terminals of the machine-side converter unit, which may be harmful for the machine insulation or rotor bearings, and to counterbalance the common mode injection at the second frequency, the same common mode voltage injections can be simultaneously applied in both the network-side and machine-side converter units. It is generally preferred that injection of the common mode voltage at the second frequency is carried out simultaneously in both the network-side and machine-side converter units. This is because the injections act in the same direction in the upper and lower converter arms and are adding to the total DC voltage and should therefore be countered by corresponding injection on the opposite side of the power converter. Injection of the common mode voltage at the first frequency is optional and it is normally used to substantially eliminate the common mode voltage at the AC terminals of the electrical machine. One arrangement is to provide the same common mode voltage injection at both the first and second frequencies and on both sides of the power converter simultaneously, i.e., in both the network-side and machine-side converter units. Another arrangement is to provide common mode voltage injection at the first frequency only in the machine-side converter unit and to provide injection at the second frequency simultaneously in both the network-side and machine-side converter units.

The common mode voltage injection can be used when the machine frequency is low, e.g., typically below about 5% of the rated frequency, including zero or close to zero frequencies, and the DC voltage and AC voltages at the AC terminals of the machine-side converter unit are low. This means that the common mode voltage injections do not require an increased voltage rating of the converter arms of the network-side and machine-side converter units.

The method can further comprise controlling one or both of the network-side and machine-side converter units to inject a first set of circulating currents at the first frequency and a second set of circulating currents at the second frequency. Circulating currents are currents which circulate amongst the converter arms in order to provide power exchange therebetween.

The first and second frequencies are selected to have sufficient separation and they are also selected to be different from both the substantially constant frequency of the current at the AC terminals of the network-side converter unit (or "network frequency") and the expected range of machine frequencies.

The method can further comprise specific circulating current injection control to balance energy stored in the submodules in the first and second converter arms of the same converter branch (so-called "vertical balancing"). The vertical balancing can be carried out at the first frequency and the circulating currents injected in phase with the first set of common mode voltages. Because the first set of common mode voltages are orientated in opposing directions in the first and second converter arms of each converter branch, the circulating currents at the first frequency provide nett power transfer between the converter arms in a vertical direction. The method can further comprise specific circulating current injection to balance energy stored in the submodules in different converter branches (so-called "horizontal balancing"). The horizontal balancing can be carried out at the second frequency and the circulating currents injected in phase with the second set of common mode voltages. Because the second set of common mode voltages are orientated in the same direction in the first and second converter arms of each converter branch, the circulating currents at the second frequency provide power transfer between the converter arms in a horizontal direction. The specific circulating current injections can be carried out in one or both of the network-side and machine-side converter units.

In summary, in the present invention, the ripples in stored energies in the converter arms of the machine-side converter unit are limited and their amplitudes virtually independent on the machine frequency because a variable DC voltage is used. Thus, the balancing control must essentially prevent only drifts of their average values. At low machine frequencies, when the AC and/or DC components in the converter arm voltages are low, the conventional balancing methods based on control of the fundamental AC and DC circulating currents are not effective and can be replaced by the alternative methods described herein.

It will be readily understood that the alternative balancing control utilizing the circulating current injection at the first frequency, when applied to the machine-side converter unit at low, including zero, machine frequencies, essentially controls average drifts in the vertical direction, not to reduce ripple components. Thus, amplitudes of these circulating currents are relatively low. This is in contrast to known balancing control where the common mode voltage and circulating current injections equivalent to that at the first frequency are utilized in the machine-side converter unit predominantly to reduce large converter arm power ripple which is associated with the high DC voltage which is kept constant in standard power converters. As a result, in these standard power converters, large common mode voltage injection and large circulating current injection at the first frequency are needed. In the present invention, the common mode voltage and circulating current injection carried out at the second frequency is added in the machine-side converter unit to provide for the horizontal balancing and to replace the conventional balancing method (based on DC circulating current control) at low machine frequencies.

Balancing control of the circulating currents at the first frequency in the network-side converter unit is not always required as the conventional balancing in the vertical direction (based on fundamental frequency AC circulating current control) remains effective at all machine frequencies due to the stable AC voltages. But application of the common mode voltage injection in the network-side converter unit at the first frequency can be advantageously used to eliminate the common mode voltage at the AC terminals of the electrical machine. This is possible in the present invention due to sufficient voltage margin created by reduced DC voltage. Balancing control of the circulating currents at the second frequency in the network-side converter unit can be employed in a similar way as in the machine-side converter unit to replace the conventional balancing in the horizontal direction (based on DC circulating current control) at low machine frequencies and when the DC voltage is low.

Although not part of the present invention, the balancing control described herein can be used if the submodules have a conventional full-bridge topology.

The present invention further provides a method of controlling a power converter as described above that includes a short-circuit branch, the method comprising closing the controllable switch of the short-circuit branch when the electrical machine is non-operational (e.g., in an off-state) to allow DC current to circulate through the short-circuit branch and bypass the machine-side converter unit. Any suitable controllable switch can be used.

If the electrical machine is non-operational and there are no AC currents in the AC terminals of the machine-side converter unit, and it is desired to provide only reactive power at the network-side converter unit, the controllable switch of the short-circuit branch can be closed. The power losses of the power converter can therefore be minimised because the machine-side converter unit is bypassed for the circulation of the DC current. The controllable switch can be opened before the electrical machine is started.

Drawings

Figure 1 is a circuit diagram of a known power converter;
Figure 2 is a circuit diagram of a power converter according to the present invention;
Figure 3 is a schematic diagram of a controller for controlling the power converter according to the present invention;
Figure 4 is a schematic diagram showing auxiliary common mode voltage injection for the power converter according to the present invention;
Figure 5 is a schematic diagram showing a specific circulating current injection for vertical balancing in the machine-side converter unit;
Figure 6 is a schematic diagram showing a control scheme for the specific circulating current injection for vertical balancing;
Figure 7 is a schematic diagram showing a specific circulating current injection for horizontal balancing in the machine-side converter unit;
Figure 8 is a schematic diagram showing a control scheme for the specific circulating current injection for horizontal balancing;
Figure 9 is a schematic diagram showing an implementation of circulating current control;
Figure 10 is a schematic diagram showing how the converter arm voltage reference signals can be derived according to the present invention;
Figure 11 shows typical converter voltage and current waveforms; and
Figure 12 is a circuit diagram of a power converter according to the present invention with a short-circuit branch.
Figure 2 shows an AC/DC/AC power converter 1 according to the present invention.

The power converter 1 includes two converter units 2, 4. Each converter unit 2, 4 includes DC terminals that are electrically connected together. In particular, the network-side converter 2 includes DC terminals 6a, 6b and the machine-side converter 4 includes DC terminals 6c, 6d.

The network-side converter unit 2 is configured as a double-star modular multi-level converter (MMC) AC/DC converter unit and is electrically connected to an AC power network or utility grid 8 (hereinafter just "power network") operating with substantially constant voltage at substantially constant frequency, e.g., 50 Hz or 60 Hz.

The machine-side converter unit 4 is also configured as a double-star MMC AC/DC converter unit and is electrically connected to an electrical machine (e.g., a motor) 10.

The network-side converter unit 2 includes six converter arms 12a, 12b, ..., 12f. The first, third and fifth converter arms 12a, 12c and 12e are sometimes referred to below as "upper" converter arms of the network-side converter unit 2, and the second, fourth and sixth converter arms 12b, 12d and 12f are sometimes referred to below as "lower" converter arms.

The machine-side converter unit 4 includes six converter arms 14a, 14b, ..., 14f. The first, third and fifth converter arms 14a, 14c and 14e are sometimes referred to below as "upper" converter arms of the machine-side converter unit 4, and the second, fourth and sixth converter arms 14b, 14d and 14f are sometimes referred to below as "lower" converter arms.

Each converter arm includes a plurality of series-connected submodules 16.

The network-side converter unit 2 includes:

- a first converter branch defined by the first and second converter arms 12a, 12b with a first intermediate node 18a which is connected to a first AC phase of the power network 8,
- a second converter branch defined by the third and fourth converter arms 12c, 12d with a second intermediate node 18b which is connected to a second AC phase of the power network, and
- a third converter branch defined by the fifth and sixth converter arms 12e, 12f with a third intermediate node 18c which is connected to a third AC phase of the power network.

The first, second and third intermediate nodes 18a, ..., 18c define AC terminals of the network-side converter unit 2.

The machine-side converter unit 4 includes:

- a first converter branch defined by the first and second converter arms 14a, 14b with a first intermediate node 20a which is connected to a first AC phase of the electrical machine 10,
- a second converter branch defined by the third and fourth converter arms 14c, 14d with a second intermediate node 20b which is connected to a second AC phase of the electrical machine, and
- a third converter branch defined by the fifth and sixth converter arms 14e, 14f with a third intermediate node 20c which is connected to a third AC phase of the electrical machine.

The first, second and third intermediate nodes 20a, ..., 20c define AC terminals of the machine-side converter unit 4.

Each submodule 16 has a "reduced full-bridge topology". A first submodule arm includes a first controllable semiconductor switch S1 and a first diode D1 electrically connected in series. A second submodule arm, connected in parallel with the first submodule arm, includes a second controllable semiconductor switch S2 and a second diode D2 electrically connected in series. An energy storage device (e.g., a capacitor C) is electrically connected in parallel with the first and second submodule arms. So each submodule arm includes a series-connected controllable semiconductor switch (e.g., an IGBT) and diode. A connecting point between each semiconductor switch and diode defines a respective submodule terminal. As shown in Figure 2 and described above, when interconnected to define the respective converter arms, the terminals of the submodules 16 of the machine-side converter unit 4 are reversed as compared with the terminals of the submodules of the network-side converter unit 2. A free-wheeling diode is connected in anti-parallel with each of the semiconductor switches. The submodules 16 are capable of producing bipolar and fully controllable voltages with unipolar current.

The following labels are used in Figure 2 to represent the various electrical quantities of the power converter 1:

- $v_c$ is the capacitor voltage of each submodule 16,
- $v_{n\,arm1}$ $v_{n\,arm2}$, ..., $v_{m\,arm6}$ are the respective converter arm voltages,
- $i_{n\,arm1}$, $i_{n\,arm2}$, ..., $i_{m\,arm6}$ are the respective converter arm currents,
- $L_{n\,arm1}$, $L_{n\,arm2}$, ..., $L_{m\,arm6}$ are the respective converter arm inductances,
- $V_{dc}$ is the DC terminal voltage, and
- $I_{dc}$ is the DC terminal current.

The following labels are used in Figure 2 to represent the various electrical quantities of the power network 8:

- $f_n$ is the network frequency, e.g., 50 or 60 Hz,
- $v_{n1}$, $v_{n2}$ and $v_{n3}$ are the AC terminal voltages for each phase, and
- $i_{n1}$, $i_{n2}$ and $i_{n3}$ are the AC terminal currents for each phase.

The following labels are used in Figure 2 to represent the various electrical quantities of the electrical machine 10:

- $f_m$ is the variable machine frequency,
- $v_{m1}$, $v_{m2}$ and $v_{m3}$ are the AC terminal voltages for each phase, and
- $i_{m1}$, $i_{m2}$ and $i_{m3}$ are the AC terminal currents for each phase.

The network-side and machine-side converter units 2, 4 can provide converter arm voltages of both polarities, i.e., positive and negative voltages. Operating the power converter 1 with variable bipolar DC voltage results in a unipolar DC current, which is compatible with the use of submodules 16 having a reduced full-bridge topology.

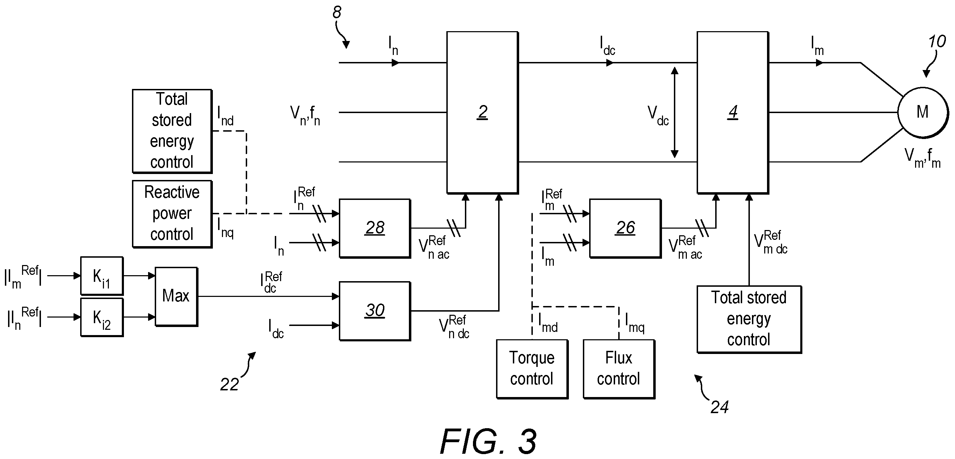

As shown in Figure 3, the power converter 1 includes a network-side controller 22 adapted to control the network-side converter unit 2, and a machine-side controller 24 adapted to control the machine-side converter unit 4.

The network-side controller 22 controls the DC current $I_{dc}$. The DC voltage $V_{dc}$ is controlled by the machine-side controller 24. In particular, the machine-side controller 24 controls the magnitude and polarity of the DC voltage to achieve the desired power flow between the network-side and machine-side converter units 2, 4.

The interconnection of the submodules 16 in the network-side and machine-side converter units 2, 4 defines the fixed direction of the DC current through the power converter 1. The power flow direction is therefore controlled by the polarity of the DC voltage. The DC current must be greater than zero (i.e., $I_{dc} > 0$) such that when $V_{dc} > 0$ power flows from the power network 8 to the electrical machine 10 and when $V_{dc} < 0$ power flows from the electrical machine to the power network. The electrical machine 10 can export power if it is taking energy from the mechanical system. This can occur, for example, during deceleration of rotor speed or if the mechanical system torque changes direction. Such a change of direction can happen if the rotor of the electrical machine is used to drive a pump (e.g., the pump of a pump storage system plant) or a winch that is used to lift and lower a load, for example. If the electrical machine 10 is operated in a motoring mode for pumping or lifting a load, the power flow direction is from the power network 8 to the electrical machine (i.e., $V_{dc} > 0$). But if the operation of the pump storage system plant changes to a turbine mode or the winch is used for lowering a load, the electrical machine 10 will operate as a generator and power flow is from the electrical machine to the power network 8 (i.e., $V_{dc} < 0$). A transition from motoring to regeneration may be the result of a change in the direction of rotation (i.e., change of sequence order of the supply voltage) of the electrical machine, but this is not necessarily associated with it. It will therefore be readily understood that changes of direction of power flow between the machine-side and network-side converter units, occurring when the electrical machine transitions between motoring and regenerating modes, is produced by a change in the polarity of the DC voltage.

The DC voltage is set by the machine-side controller 24 to control the total energy stored in the submodules 16 of the machine-side converter unit 4, i.e., in the capacitors of each submodule, by balancing the average power transferred between the network-side and machine-side converter units with the power supplied to the electrical machine 10.

The machine-side converter unit 4 is controlled on the basis of:

- a first machine-side voltage reference signal $V_{m\,dc}^{Ref}$ indicative of a desired DC voltage at the DC terminals of the machine-side converter unit, and

- a second machine-side voltage reference signal $V_{m\,ac}^{Ref}$ indicative of desired AC voltages at the AC terminals of the machine-side converter unit.

The second machine-side voltage reference signal $V_{m\,ac}^{Ref}$ is generated by a conventional synchronous reference frame based sub-controller 26 which receives:

- a machine-side AC current reference signal $I_m^{Ref}$, and
- a machine-side AC current feedback signal $I_m$.

The machine-side AC current reference signal $I_m^{Ref}$ has an active current component $I_{md}$ and a reactive current component $I_{mq}$. The active current component $I_{md}$ can be indicative of a desired torque or speed of the electrical machine 10 (i.e., an active or torque-inducing component) and the reactive current component $I_{mq}$ can be indicative of a desired magnetising flux or the electrical machine or power factor (i.e., a reactive or magnetising current component), for example.

The DC current $I_{dc}$ is controlled with reference to the AC currents at the AC terminals of one or both of the network-side and machine-side converter units 2, 4. The DC current will preferably be set to a level that is defined by the maximum AC current magnitudes at the AC terminals of both the network-side and machine-side converter units 2, 4 scaled by a respective predefined gain or scaling factor. In particular, the network-side converter unit 2 is controlled on the basis of:

- a first network-side voltage reference signal $V_{n\,ac}^{Ref}$ indicative of desired AC voltages at the AC terminals of the network-side converter unit, and

- a second network-side voltage reference signal $V_{n\,dc}^{Ref}$ indicative of a desired DC current at the DC terminals of the network-side converter unit.

The first network-side voltage reference signal $V_{n\,ac}^{Ref}$ is generated by a conventional synchronous reference frame based sub-controller 28 which receives:

- a network-side AC current reference signal $I_n^{Ref}$, and
- a network-side AC current feedback signal $I_n$.

The network-side AC current reference signal $I_n^{Ref}$ has an active current component $I_{nd}$ and a reactive current component $I_{nd}$. The active current component $I_{md}$ can be used to control the total energy stored in the submodules 16 of the network-side converter unit 2 and the reactive current component $I_{mq}$ can be indicative of a desired reactive power or power factor, for example.

The second network-side voltage reference signal $V_{n\,dc}^{Ref}$ is generated by a sub-controller 30 which receives:

- a DC current reference signal $I_{dc}^{Ref}$ that is selected to be the maximum of the absolute values of the network-side and machine-side AC current reference signals $\left|I_n^{Ref}\right|$ and $\left|I_m^{Ref}\right|$ scaled by a respective predefined gain or scaling factor $K_{i1}$ and $K_{i2}$, and
- a DC current feedback signal $I_{dc}$.

Any voltage and current feedback signals can be provided by suitable sensors or transducers of the power converter.

The voltage reference signals generated by the sub-controllers 26, 28 and 30 are used to derive converter arm voltage reference signals for the network-side and machine-side converter units 2, 4. The converter arm voltage references are provided to respective pulse width modulation (PWM) generators, which use the reference signals to generate gate drive commands for controlling the switching of the first and second controllable semiconductor switches S1, S2 in the submodules 16 of the network-side and machine-side converter units to synthesise the required converter arm voltage.

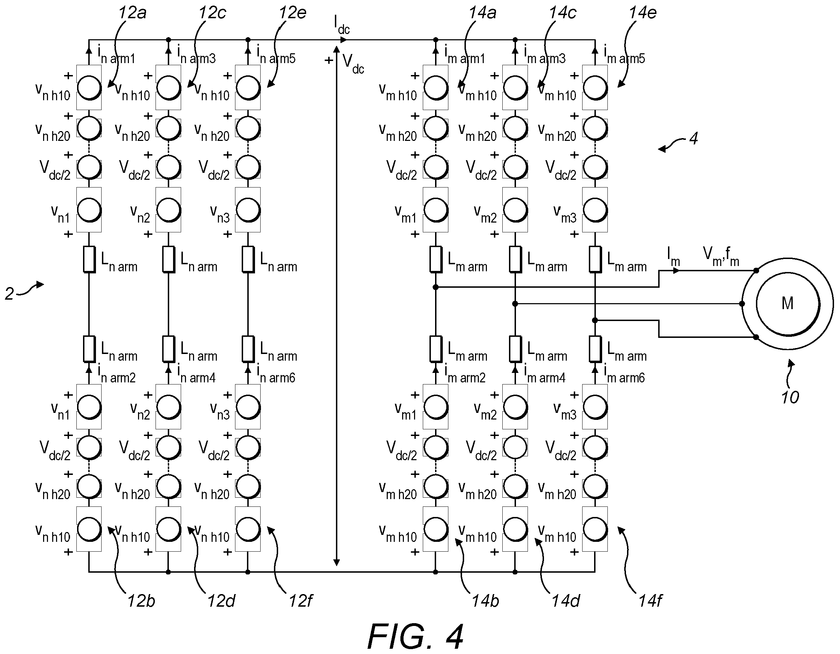

When the machine frequency is low, e.g., below about 5% of rated frequency, such that the DC voltage and the AC voltages in the AC terminals of the machine-side converter unit 4 are both low, two sets of common mode voltages are injected into the converter arms of the network-side and machine-side converter units 2, 4. A first set of common mode voltages with magnitude $V_{h10}$ are injected at a first frequency $f_{h1}$ with opposing polarities in the upper and lower converter arms of each converter branch, and a second set of common mode voltages with magnitude $V_{h20}$ are injected at a second frequency $f_{h2}$, different from the first frequency, and with the same polarities in the upper and lower converter arms of each converter branch. This is shown schematically in Figure 4. It will be noted that in Figure 4 the power network 8 has been omitted for clarity.

As well as being selected to be sufficiently different from each other - i.e., to have sufficient separation - the first and second frequencies (or "injection frequencies") $f_{h1}$, $f_{h2}$ are selected to be different from both the network frequency $f_n$ and the expected range of machine frequencies $f_m$.

The magnitude of the injected common mode voltages $V_{h10}$, $V_{h20}$ can be pre-selected or dynamically varied as a function of the machine frequency $f_m$.

The following describes balancing control for the machine-side converter unit 4, but it will be readily understood that similar balancing control can also be applied to the network-side converter unit 2 as appropriate.

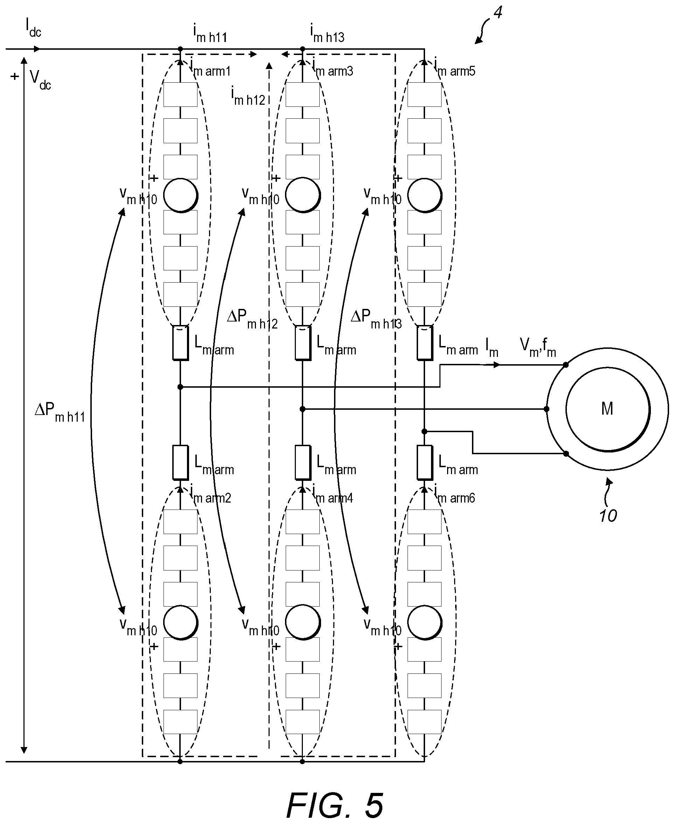

Referring to Figure 5, vertical balancing of energy stored in the submodules 16 in the converter arms of each converter branch of the machine-side converter unit 4 can be carried out by specific circulating current injection to compensate for the loss of the conventional balancing control when the machine frequency is low. For the network-side converter unit 2, vertical balancing using $f_{h1}$ injection is not necessary because the AC voltages of the power network are normally high and stable which is a pre-request for using the conventional vertical balancing methods based on circulating current injection at the fundamental frequency.

The vertical balancing is carried out by controlling the magnitude of circulating currents at the first frequency $f_{h1}$ injected in phase with the injected common mode voltage $V_{h10}$ as given by:

$$v_{m\,h10} = V_{h10}\cos(\omega_{h1}t)$$

where $v_{m\,h10}$ is the instantaneous injected common mode voltage in the respective converter arm (note that the injected common mode voltages have opposing polarity as indicated in Figure 5) and $\omega_{h1}$ is the angular frequency.

The circulating currents injected in the converter arms of the machine-side converter unit 4 are in phase with the injected common mode voltage $V_{h10}$ such that:

$$i_{m\,h11} = I_{m\,h11} \cos(\omega_{h1} t)$$

$$i_{m\,h12} = I_{m\,h12} \cos(\omega_{h1} t)$$

$$i_{m\,h13} = I_{m\,h13} \cos(\omega_{h1} t)$$

where $i_{m\,h11}$, $i_{m\,h12}$, and $i_{m\,h13}$ are first, second and third instantaneous currents and $I_{m\,h11}$, $I_{m\,h11}$, and $I_{m\,h11}$ are magnitudes of the first, second and third currents at frequency $f_{h1}$ circulating in the converter arms of the machine-side converter unit 4.

In interaction with the common mode voltage injection, the circulating currents produce average power flows between the upper and lower converter arms in each converter branch as shown in Figure 5. These power flows eliminate any differences in stored energies and balance capacitor voltages between vertical pairs of the converter arms:

$$\Delta P_{m\,h11} = \frac{1}{2} V_{h10} I_{m\,h11}$$

$$\Delta P_{m\,h12} = \frac{1}{2} V_{h10} I_{m\,h12}$$

$$\Delta P_{m\,h13} = \frac{1}{2} V_{h10} I_{m\,h13}$$

where $\Delta P_{m\,h11}$, $\Delta P_{m\,h12}$, and $\Delta P_{m\,h13}$ are the power flows between the upper and lower converter arms of each converter branch.

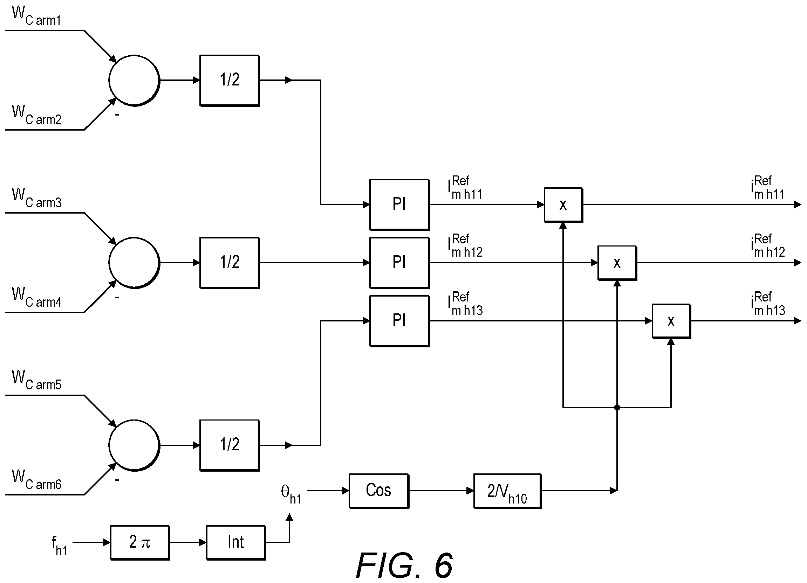

Figure 6 shows an example of a control scheme for implementing the vertical balancing where $W_{c\,arm1}$, $W_{c\,arm2}$, ..., $W_{c\,arm6}$ are the energies stored in the capacitors of the submodules in the upper and lower converter arms of the converter branches, $i_{m\,h11}^{Ref}$, $i_{m\,h12}^{Ref}$, and $i_{m\,h13}^{Ref}$ are the instantaneous current reference signals, and $\theta_{h1}$ is the phase of the common mode voltage, where $\theta_{h1} = \omega_{h1} t$. For each converter branch, the energy stored in the submodules of the upper converter arm (e.g., $W_{c\,arm1}$) is compared with the energy stored in the submodules of the lower converter arm (e.g., $W_{c\,arm2}$) and any difference or error is provided as an input to a respective PI controller which outputs the magnitude of the circulating current for the converter branch. The instantaneous current reference signals are set to be in phase with the injected common mode voltage $V_{h10}$. The sum of circulating currents, $i_{m\,h11}$, $i_{m\,h12}$ and $i_{m\,h13}$ may not be zero in all instances and then some residual current may flow through DC link and close via the network-side converter unit. However, the effect of any such residual current is easily rejected at the network-side converter unit by the much stronger conventional vertical balancing control.

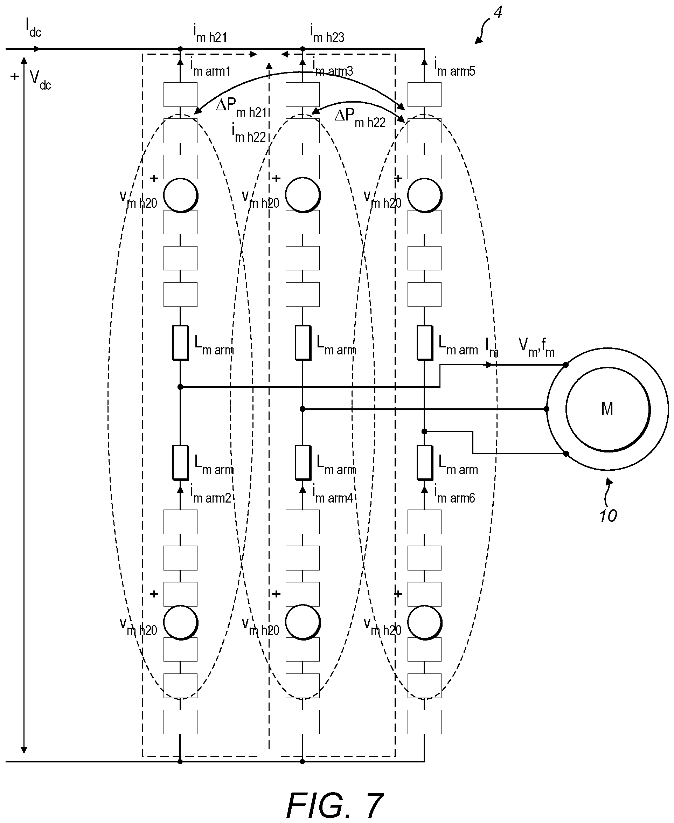

Referring to Figure 7, horizontal balancing can be used to compensate for the loss of conventional balancing control. This loss of control can affect both the network-side and machine-side converter units and can therefore be applied to both converter units even though Figure 7 only shows the horizontal balancing for the machine-side converter unit 4.

Horizontal balancing is performed by controlling the magnitudes of circulating currents at the second frequency $f_{h2}$ as a function of the deviation of the sum of the stored energy in the submodules of pairs of converter arms. The circulating currents are injected in phase with the injected common mode voltage $V_{h20}$ such that:

$$i_{m\,h21} = I_{m\,h21} \cos(\omega_{h2} t)$$

$$i_{m\,h22} = I_{m\,h22}\cos(\omega_{h2}t)$$

where $i_{m\,h21}$ and $i_{m\,h22}$ are first and second instantaneous currents, $I_{m\,h21}$ and $I_{m\,h22}$ are magnitudes of the first and second currents at frequency $f_{h2}$ circulating in the converter arms of the machine-side converter unit 4, and $\omega_{h2}$ is the angular frequency.

These currents interact with the injected common mode voltage $V_{h20}$ as given by:

$$v_{m\,h20} = V_{h20}\cos(\omega_{h2}t)$$

where $v_{m\,h20}$ is the instantaneous injected common mode voltage in the converter arms (note that the injected common mode voltages have the same polarity as indicated in Figure 7), and produces average power flow between pairs of converter arms in the horizontal direction:

$$\Delta P_{m\,h21} = V_{h20}I_{m\,h21}$$

$$\Delta P_{m\,h22} = V_{h20}I_{m\,h22}$$

The sum of the circulating currents should be zero such that the third instantaneous current $i_{m\,h23}$ can be deduced from the first and second currents $i_{m\,h21}$ and $i_{m\,h22}$ as follows:

$$i_{m\,h23} = -(i_{m\,h21} + i_{m\,h22}) = -(I_{m\,h21} + I_{m\,h22})\cos(\omega_{h2}t) = 0$$

$$I_{m\,h23} = -(I_{m\,h21} + I_{m\,h22})$$

where $I_{m\,h23}$ is the magnitude of the third current at frequency $f_{h2}$ circulating in the converter arms of the machine-side converter unit 4.

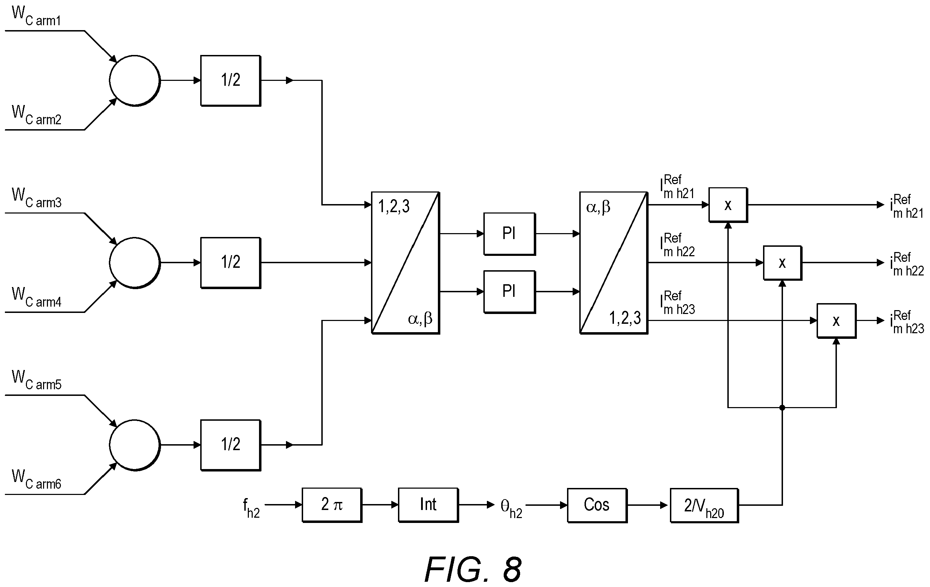

Figure 8 shows an example of a control scheme for implementing the horizontal balancing. The alpha-beta transformation removes the average value of the stored energies in the converter arms, creating difference outputs between the averaged stored energies of three pairs of converter arms and the global average stored energy. The difference outputs are provided to PI controllers which output the magnitudes of the circulating currents at the second frequency $f_{h2}$. In Figure 8, $i_{m\,h21}^{Ref}$, $i_{m\,h22}^{Ref}$, and $i_{m\,h23}^{Ref}$ are the circulating current reference signals, and $\theta_{h2} = \omega_{h2}t$.

The same control scheme can also be used to provide horizontal balancing on the network-side converter unit 2.

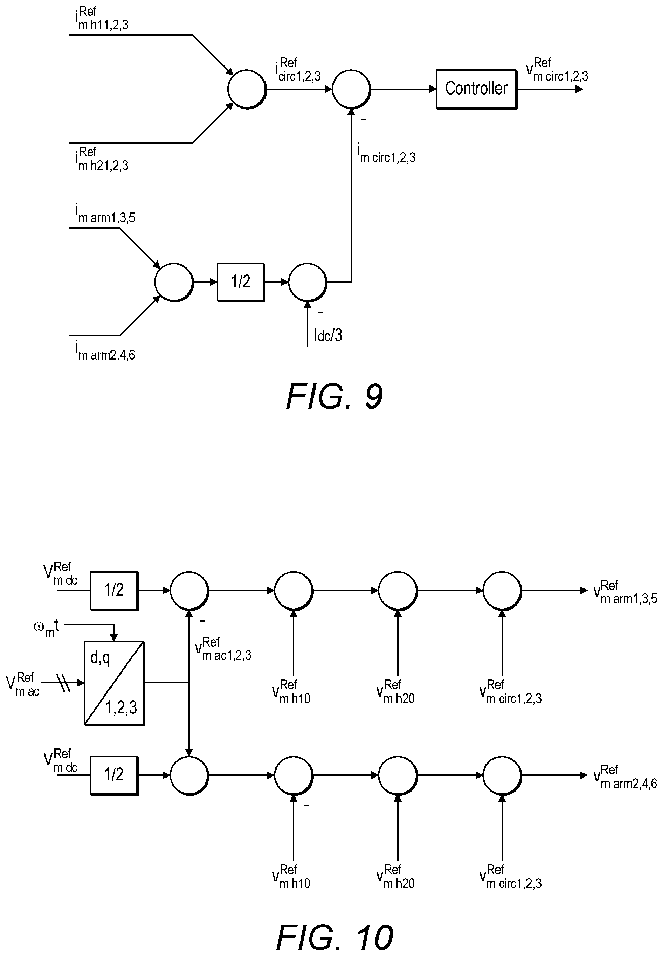

Circulating current control methods are well known where control of the AC and DC circulating current components at the fundamental frequency is used for arm capacitor voltage balancing. Figure 9 shows an example of a possible implantation of a circulating current controller suitable for use in the present invention. At lower machine frequencies, circulating current reference signals set according to the present invention are used instead of the reference signals set by the conventional balancing control. The switch between the different circulating current reference signals is preferably carried out as a seamless process, and can take place at a particular machine frequency/speed.

In this implementation, the circulating current reference signals $i_{m\,circ1,2,3}^{Ref}$ for the machine-side converter unit 4 are given by:

$$i_{m\,circ1,2,3}^{Ref} = i_{m\,h11,2,3}^{Ref} + i_{m\,h21,2,3}^{Ref}$$

The actual circulating currents flowing through the first and second converter arms $(i_{m\,circ1})$, the third and fourth converter arms $(i_{m\,circ2})$ and the fifth and sixth converter arms $(i_{m\,circ3})$ of the machine-side converter unit 4 can be extracted from the arm currents after subtracting the arm current fundamental frequency AC and DC components which flow through the external terminals. The AC components can be eliminated by finding the average value of the converter arm currents in the upper and lower converter arms (i.e., $i_{m\,arm1,3,5}$ and $i_{m\,arm2,4,6}$) of the machine-side converter unit 4 and then subtracting a third of the DC current component ($I_{dc}$/3) The residual current values represent the circulating currents where:

$$i_{m\,circ1,2,3} = \frac{i_{m\,arm1,2,3} + i_{m\,arm2,4,6}}{2} - \frac{I_{dc}}{3}$$

The circulating currents are compared against their reference signals and the error signals are provided as an input to a circulating current controller, which can be a P controller, a PI controller, or multiple resonant (RES) controllers or multiple synchronous reference frame based PI controllers (targeting components at multiple frequencies), for example. The circulating current controller sets reference signals for the voltages required for forcing the circulating currents to follow the reference signals. The circulating current controller can be implemented as part of the respective network-side and machine-side controller.

Figure 10 shows the final synthesis of the converter arm voltage reference signals which is also well known and can be implemented as part of the respective network-side and machine-side controller. The converter arm voltages comprise the fundamental frequency AC and DC voltage components set by the respective sub-controllers of the AC and DC terminal current components. In addition to these components, the common mode and circulating current controlling voltage components are added. The overall converter arm voltage reference signals $v^{Ref}_{m\,arm1,3,5}$ and $v^{Ref}_{m\,arm2,4,6}$ for the machine-side converter unit 4 are then provided to respective PWM generators, not shown, which use the reference signals to generate gate drive commands for controlling the switching of the first and second controllable semiconductor switches S1, S2 in the submodules 16 of the machine-side converter unit to synthesise the required converter arm voltages.

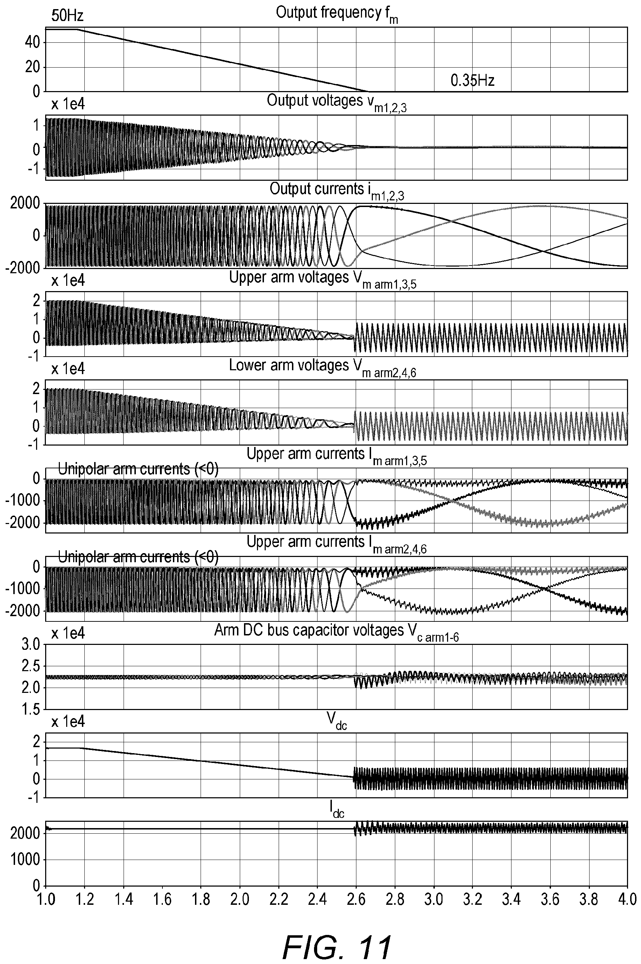

Figure 11 shows voltage and current waveforms during a ramp down of machine frequency $f_m$ from 50 Hz to 0.35 Hz. In particular, the following waveforms are shown:

- machine frequency $f_m$ (or "output frequency"),
- AC terminal voltages $v_{m1}$, $v_{m2}$ and $v_{m3}$ for each phase of the machine-side converter unit (or "output voltages"),
- AC terminal currents $i_{m1}$, $i_{m2}$ and $i_{m3}$ for each phase of the machine-side converter unit (or "output currents"),
- voltages $v_{m\,arm1}$ $v_{m\,arm3}$ and $v_{m\,arm5}$ of the upper converter arms of the machine-side converter unit,
- voltages $v_{m\,arm2}$ $v_{m\,arm4}$ and $v_{m\,arm6}$ of the lower converter arms of the machine-side converter unit,
- currents $i_{m\,arm1}$ $i_{m\,arm3}$ and $i_{m\,arm5}$ of the upper converter arms of the machine-side converter unit,
- currents $i_{m\,arm2}$ $i_{m\,arm4}$ and $i_{m\,arm6}$ of the lower converter arms of the machine-side converter unit,
- Total arm capacitor ($C_{eq}$) voltage,
- Intermediate DC voltage $V_{dc}$, and
- Intermediate DC current $I_{dc}$.

It is assumed that the electrical machine 10 delivers constant torque and so the AC currents of the electrical machine have substantially constant magnitudes. Consequently, the intermediate DC current $I_{dc}$ is maintained at a substantially constant value. With constant magnetic flux, the AC voltages of the electrical machine 10 are proportional to the machine frequency $f_m$. The intermediate DC voltage $V_{dc}$ will vary depending on the power that is transferred between the network-side and machine-side converters with substantially constant DC current - which ensures that the converter arm currents remain unipolar. As with constant torque loads, the machine power is proportional to machine speed and, when the machine frequency is ramped down from 50 Hz to 0.35 Hz, the DC voltage decreases linearly. Because of the substantially constant ratio of DC voltage and machine frequency, the ripple in the converter arm capacitor voltages remains substantially the same at all frequencies. This is a significant benefit of using variable DC voltage. At machine frequencies close to zero, the conventional balancing control is lost. At low machine speeds the balancing control of stored energies is therefore switched from conventional balancing (relying on converter arm voltages and circulating currents at the DC and fundamental AC frequency) to the balancing control described above, which is based on the injected common mode voltages and controlled circulating currents at the first and second frequencies $f_{h1}$ and $f_{h2}$. The speed/frequency at which balancing control is switched can be pre-set and in this example is 0.5 Hz. In the example, $f_{h1}$ is 37.7 Hz and $f_{h2}$ is 75.4 Hz.

With the balancing control below a pre-set speed of 0.5 Hz, additional frequencies appear in the converter arm voltages and currents. In this way, the balancing of the stored energies in the converter arms (or arm capacitor $C_{eq}$ voltages) can be performed reliably in continuous operation at very low machine frequencies, including zero.

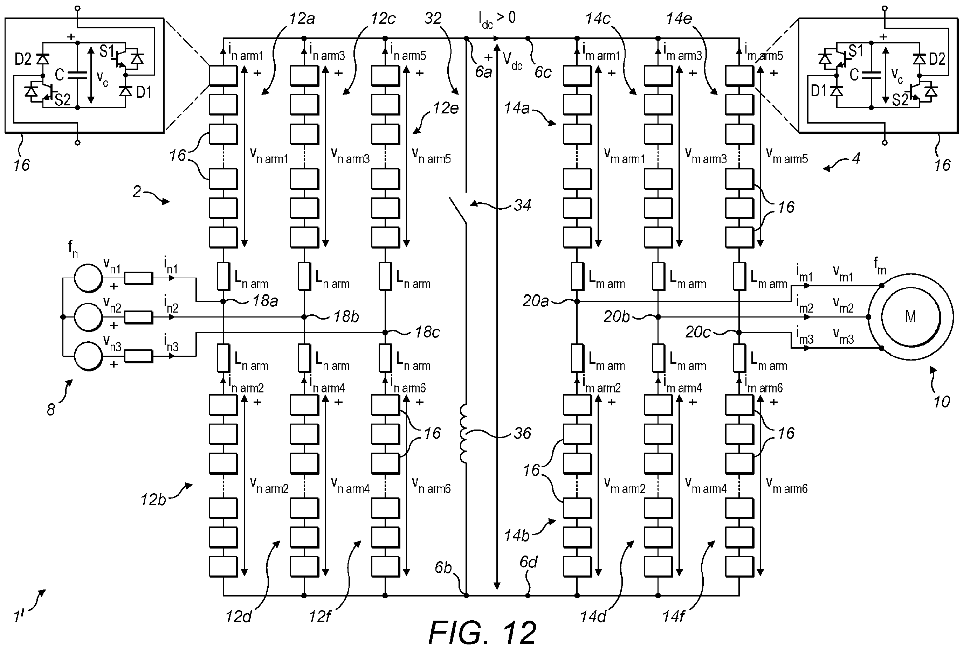

Figure 12 shows an alternative back-to-back double star MMC power converter 1' according to the present invention. The power converter 1' is substantially similar to the power converter shown in Figure 2 and the same parts have been given the same reference signs. The power converter includes a short-circuit branch 32 connected between the DC terminals. The short-circuit branch includes a controllable switch 34 and an optional inductor 36. When the electrical machine is non-operational, e.g., in an off-state, the controllable switch 34 can be closed to allow DC current to circulate through the short-circuit branch and bypass the machine converter unit 4. This also allows for reactive power to be provide at the network-side converter unit 2. The controllable switch 34 can be opened before the electrical machine 10 is started.

**Claims**

1. A power converter (1; 1') interfacing an alternating current AC electrical machine (10) that operates with variable voltage at variable frequency with an AC power network (8) that operates with substantially constant voltage at substantially constant frequency, the power converter (1; 1') comprising:

   a network-side converter unit (2) comprising at least one converter branch connected between first and second direct current DC terminals (6a, 6b), each converter branch including an AC terminal (18a, 18b, 18c) electrically connectable to a corresponding AC phase of the power network;
   a machine-side converter unit (4) comprising at least one converter branch connected between third and fourth DC terminals (6c, 6d), each converter branch including an AC terminal (20a, 20b, 20c) electrically connectable to a corresponding AC phase of the electrical machine (10), wherein the first and second DC terminals (6a, 6b) are respectively electrically connected to the third and fourth DC terminals (6c, 6d), and the power converter (1; 1') is adapted to carry a variable bipolar DC voltage and a unipolar DC current; and
   a controller (22, 24) for controlling one of the network-side and machine-side converter units (2, 4);
   wherein the network-side converter unit (2) is a modular multilevel converter MMC, wherein each converter branch of the network-side converter unit (2) comprises a first converter arm (12a, 12c, 12e) electrically connected between the first DC terminal (6a) and the respective AC terminal (18a, 18b, 18c) and including a plurality of series-connected submodules (16), and a second converter arm (12b, 12d, 12f) electrically connected between the respective AC terminal (18a, 18b, 18c) and the second DC terminal (6b) and including a plurality of series-connected submodules (16);
   wherein the machine-side converter unit (4) is an MMC, wherein each converter branch of the machine-side converter unit (4) comprises a first converter arm (14a, 14c, 14e) electrically connected between the third DC terminal (6c) and the respective AC terminal (20a, 20b, 20c) and including a plurality of series-connected submodules (16), and a second converter arm (14b, 14d, 14f) electrically connected between the respective AC terminal (20a, 20b, 20c) and the fourth DC terminal (6d) and including a plurality series-connected submodules (16); and
   wherein each submodule (16) of the network-side and machine-side converter units (2, 4) comprises:

      a first submodule arm including a first controllable semiconductor switch (S1) and a first diode (D1) electrically connected in series;
      a second submodule arm, connected in parallel with the first submodule arm, the second submodule arm including a second controllable semiconductor switch (S2) and a second diode (D2) electrically connected in series; and
      an energy storage device (C) electrically connected in parallel with the
      first and second submodule arms; and

      wherein the controller (22, 24) is adapted to control the magnitude and polarity of the DC voltage to achieve a desired magnitude and direction of power flow between the network-side and machine-side converter units (2, 4).

2. A power converter (1; 1') according to claim 1, wherein for each submodule (16), a connecting point between the first controllable semiconductor switch (S1) and the first diode (D1) defines a first submodule terminal and a connecting point between the second controllable semiconductor switch (S2) and the second diode (D2) defines a second submodule terminal, and wherein the interconnection of the first and second submodule terminals of the series-connected submodules (16) of the machine-side converter unit (4) is reversed as compared with the interconnection of the first and second submodule terminals of the series-connected submodules (16) of the network-side converter unit (2).

3. A power converter (1') according to claim 1 or claim 2, further comprising a short-circuit branch (32) electrically connected between the first and second DC terminals (6a, 6b), the short-circuit branch including a controllable switch (34), and optionally an inductor (36).

4. A power converter (1; 1') according to any preceding claim, wherein the controller is a machine-side controller (24) adapted to control the machine-side converter unit (4) using a first machine-side voltage reference signal indicative of a desired DC voltage at the third and fourth DC terminals (6c, 6d).

5. A power converter (1; 1') according to claim 4, wherein the machine-side controller (24) is further adapted to control the machine-side converter unit (4) using a second machine-side voltage reference signal indicative of desired AC voltages at the AC terminals (20a, 20b, 20c) of the machine-side converter unit (4), the second machine-side voltage reference signal optionally being generated by a machine-side sub-controller (26) which receives a machine-side AC current reference signal and a machine-side AC current feedback signal.

6. A power converter (1; 1') according to claim 4 or claim 5, further comprising a network-side controller (22) adapted to control the network-side converter unit (2) using a first network-side voltage reference signal indicative of desired AC voltages at the AC terminals (18a, 18b, 18c) of the network-side converter unit (2), and a second network-side voltage reference signal indicative of a desired DC current at the first and second DC terminals (6a, 6b).

7. A power converter (1; 1') according to claim 6, wherein the first network-side voltage reference signal is generated by a first network-side sub-controller (28) which receives a network-side AC current reference signal, and a network-side AC current feedback signal, and wherein the second network-side voltage reference signal is generated by a second network-side sub-controller (30) which receives a DC current reference signal that is selected to be the maximum of the absolute values of the network-side and machine-side AC current references, preferably scaled by a respective predefined gain or scaling factor, and a DC current feedback signal.

8. An arrangement comprising:

an AC power network (8) that operates with substantially constant voltage at substantially constant frequency;
an AC electrical machine (10) that operates with variable voltage at variable frequency; and
a power converter (1; 1') according to any preceding claim, wherein each AC terminal (18a, 18b, 18c) of the network-side converter unit (2) is electrically connected to a corresponding AC phase of the power network (8) and each AC terminal (20a, 20b, 20c) of the machine-side converter unit (4) is electrically connected to a corresponding AC phase of the electrical machine (10);
wherein the controller (22, 24) is further adapted to control the polarity of the DC voltage to achieve a desired power flow direction between the power network (8) and the electrical machine (10).

9. A method of controlling a power converter (1; 1') interfacing an AC electrical machine (10) that operates with variable voltage at variable frequency with an AC power network (8) that operates with substantially constant voltage at substantially constant frequency, the power converter (1; 1') comprising:

a network-side converter unit (2) comprising at least one converter branch connected between first and second DC terminals (6a, 6b), each converter branch including an AC terminal (18a, 18b, 18c) electrically connectable to a corresponding AC phase of the power network (8); and
a machine-side converter unit (4) comprising at least one converter branch connected between third and fourth DC terminals (6c, 6d), each converter branch including an AC terminal (20a, 20b, 20c) electrically connectable to a corresponding AC phase of the electrical machine (10), wherein the first and second DC terminals (6a, 6b) are respectively electrically connected to the third and fourth DC terminals (6c, 6d), and the power converter (1; 1') is adapted to carry a variable bipolar DC voltage and a unipolar DC current;
wherein the network-side converter unit (2) is a modular multilevel converter MMC, wherein each converter branch of the network-side converter unit (2) comprises a first converter arm (12a, 12c, 12e) electrically connected between the first DC terminal (6a) and the respective AC terminal (18a, 18b, 18c) and including a plurality of series-connected submodules (16), and a second converter arm (12b, 12d, 12f) electrically connected between the respective AC terminal (18a, 18b, 18c) and the second DC terminal (6b) and including a plurality series-connected submodules (16);
wherein the machine-side converter unit (4) is an MMC, wherein each converter branch of the machine-side converter unit (4) comprises a first converter arm (14a, 14c, 14e) electrically connected between the third DC terminal (6c) and the respective AC terminal (20a, 20b, 20c) and including a plurality of series-connected submodules (16), and a second converter arm (14b, 14d, 14f) electrically connected between the respective AC terminal (20a, 20b, 20c) and the fourth DC terminal (6d) and including a plurality series-connected submodules (16); and
wherein each submodule of the network-side and machine-side converter units (2,4) comprises:

a first submodule arm including a first controllable semiconductor switch (S1) and a first diode (D1) electrically connected in series;
a second submodule arm, connected in parallel with the first submodule arm, the second submodule arm including a second controllable semiconductor switch (S2) and a second diode (D1) electrically connected in series; and
an energy storage device (C) electrically connected in parallel with the first and second submodule arms;

wherein the method comprises controlling the magnitude and polarity of the DC voltage to achieve a desired magnitude and direction of power flow between the network-side and machine-side converter units (2, 4).

10. A method according to claim 9, wherein the DC voltage is set to control the total energy stored in the submodules (16) of the machine-side converter unit (4) by balancing the average power transferred between the network-side and machine-side converter units (2, 4) with the power supplied to the electrical machine (10).

11. A method according to claim 9 or claim 10, wherein the DC current is set to a level that is defined by the maximum AC current magnitudes at the AC terminals of both the network-side and machine-side converter units (2, 4), optionally scaled by a respective predefined gain or scaling factor.

12. A method according to any of claim 9 to 11, further comprising controlling one or both of the machine-side and network-side converter units (2, 4) to inject a first set of common mode voltages at a first frequency with opposing polarities in the first and second converter arms (12a, 12b, ..., 12f, 14a, 14b, ..., 14f) of each converter branch, and a second set of common mode voltages at a second frequency, different from the first frequency, and with the same polarities in the first and second converter arms of each converter branch (12a, 12b, ..., 12f, 14a, 14b, ..., 14f).

13. A method according to any of claims 9 to 12, further comprising controlling one or both of the machine-side and network-side converter units (2, 4) to inject a first set of circulating currents at the first frequency and a second set of circulating currents at the second frequency in order to provide controllable power flows for balancing the average value of the total energy stored in the submodules (16) of each converter branch.

14. A method of controlling the power converter according to claim 2 or claim 3, comprising closing the controllable switch (34) when the electrical machine (10) is non-operational to allow current to circulate through the short-circuit branch (32) and bypass the machine-side converter unit (4).

15. A method according to claim 14, further operating the network-side converter unit (2) to provide only reactive power.

FIG. 1

EP 4 213 330 A1

FIG. 2

EP 4 213 330 A1

FIG. 3

EP 4 213 330 A1

FIG. 4

FIG. 5

FIG. 6

FIG. 7

FIG. 8

$i_{m\,h1\,1,2,3}^{Ref}$

$i_{circ1,2,3}^{Ref}$

$v_{m\,circ1,2,3}^{Ref}$

Controller

$i_{m\,h2\,1,2,3}^{Ref}$

$-$

$i_{m\,circ1,2,3}$

$i_{m\,arm1,3,5}$

1/2

$-$

$i_{m\,arm2,4,6}$

$I_{dc}/3$

## FIG. 9

$V_{m\,dc}^{Ref}$

1/2

$-$

$v_{m\,arm1,3,5}^{Ref}$

$\omega_m t$

$v_{m\,ac1,2,3}^{Ref}$

$V_{m\,ac}^{Ref}$

d,q / 1,2,3

$v_{m\,h10}^{Ref}$

$v_{m\,h20}^{Ref}$

$v_{m\,circ1,2,3}^{Ref}$

$V_{m\,dc}^{Ref}$

1/2

$-$

$v_{m\,arm2,4,6}^{Ref}$

$v_{m\,h10}^{Ref}$

$v_{m\,h20}^{Ref}$

$v_{m\,circ1,2,3}^{Ref}$

## FIG. 10

FIG. 11

FIG. 12

EUROPEAN SEARCH REPORT

Application Number

EP 22 15 1887

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAU SHAMBHU ET AL: "Analysis and reduction of capacitor ripple current in modular multilevel converter for variable speed drives", 2016 18TH EUROPEAN CONFERENCE ON POWER ELECTRONICS AND APPLICATIONS (EPE'16 ECCE EUROPE), JOINTLY OWNED BY IEEE-PELS AND EPE ASSOCIATION, 5 September 2016 (2016-09-05), pages 1-10, XP032985218, DOI: 10.1109/EPE.2016.7695501 [retrieved on 2016-10-25] * figures 1c),2 * * page 2073 - page 2076 * ----- | 1-15 | INV. H02J3/38 H02M7/483 |
| X | BASIC MIODRAG ET AL: "Hybrid Modular Multilevel Converter Design and Control for Variable Speed Pumped Hydro Storage Plants", IEEE ACCESS, IEEE, USA, vol. 9, 5 October 2021 (2021-10-05), pages 140050-140065, XP011884049, DOI: 10.1109/ACCESS.2021.3118277 [retrieved on 2021-10-18] * the whole document * ----- | 1,9 | |
| | | | TECHNICAL FIELDS SEARCHED (IPC) H02J H02M |
| A | SAU SHAMBHU ET AL: "Modular multilevel converter based variable speed drives with constant capacitor ripple voltage for wide speed range", IECON 2017 - 43RD ANNUAL CONFERENCE OF THE IEEE INDUSTRIAL ELECTRONICS SOCIETY, IEEE, 29 October 2017 (2017-10-29), pages 2073-2078, XP033279856, DOI: 10.1109/IECON.2017.8216348 [retrieved on 2017-12-15] * the whole document * ----- -/-- | 1-15 | |

The present search report has been drawn up for all claims

| Place of search | Date of completion of the search | Examiner |
|---|---|---|
| Munich | 22 June 2022 | Berger, Josef |

EPO FORM 1503 03.82 (P04C01)

Europäisches
Patentamt

European
Patent Office

Office européen
des brevets

# EUROPEAN SEARCH REPORT

**Application Number**

EP 22 15 1887

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 108 667 390 B (UNIV XI AN JIAOTONG) 10 January 2020 (2020-01-10) * the whole document * ----- | 1-15 | |

TECHNICAL FIELDS
SEARCHED      (IPC)

The present search report has been drawn up for all claims

| Place of search | Date of completion of the search | Examiner |
|---|---|---|
| Munich | 22 June 2022 | Berger, Josef |

EPO FORM 1503 03.82 (P04C01)

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.....................................................................

& : member of the same patent family, corresponding
    document

## ANNEX TO THE EUROPEAN SEARCH REPORT
## ON EUROPEAN PATENT APPLICATION NO.

EP 22 15 1887

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2022

| Patent document cited in search report | Publication date | Patent family member(s) | Publication date |
|---|---|---|---|
| CN 108667390 B | 10-01-2020 | NONE | |

EPO FORM P0459